# EUROPÄISCHE PATENTSCHRIFT

(11) **EP 4 335 280 B1**
(45) Veröffentlichungstag und Bekanntmachung des Hinweises auf die Patenterteilung: **08.04.2026**
(21) Anmeldenummer: 23179456.1
(22) Anmeldetag: 15.06.2023
(51) Int. Cl.: A01D 41/127

(54) **SELBSTFAHRENDE LANDWIRTSCHAFTLICHE ARBEITSMASCHINE MIT EINER MESSVORRICHTUNG**
SELF-PROPELLED AGRICULTURAL WORKING MACHINE WITH A MEASURING DEVICE
MACHINE DE TRAVAIL AGRICOLE AUTOPROPULSÉE AVEC UN DISPOSITIF DE MESURE

(30) Priorität: 30.08.2022 DE 102022121838
(43) Veröffentlichungstag der Anmeldung: 13.03.2024
(73) Patentinhaber: CLAAS Selbstfahrende Erntemaschinen GmbH, 33428 Harsewinkel (DE)
(72) Erfinder: Baumgarten, Joachim, 48361 Beelen (DE)
(74) Vertreter: CLAAS Gruppe

(56) Entgegenhaltungen:
- EP-A1- 1 305 994
- EP-A1- 2 401 906
- EP-A1- 2 826 356
- EP-A1- 3 301 408
- EP-A2- 2 189 781

## Beschreibung

Die vorliegende Erfindung betrifft eine selbstfahrende landwirtschaftliche Arbeitsmaschine zur Aufnahme von Erntegut und zur Bearbeitung und Förderung eines aus dem aufgenommenen Erntegut gebildeten Erntegutstroms und eine Messvorrichtung für diese selbstfahrende landwirtschaftliche Arbeitsmaschine.

Selbstfahrende landwirtschaftliche Arbeitsmaschine, zu denen etwa Mähdrescher und Feldhäcksler zählen, nehmen Erntegut vom Feld auf und bearbeiten es mit einer Reihe von Arbeitsgeräten, um etwa einen möglichst großen Kornertrag in den Korntank der Erntemaschine abschöpfen zu können. Diese Arbeitsgeräte sind steuerbar, wobei insbesondere ihre Parameter - also Betriebsparameter der Arbeitsgeräte - eingestellt werden können und wobei je nach Einstellung dieser Parameter und den herrschenden Randbedingungen eine höhere oder niedrigere Qualität des geernteten Ernteguts die Folge ist. Zur Steuerung der Arbeitsgeräte und zur Einstellung ihrer Parameter weisen moderne Erntemaschinen regelmäßig Steuer- und Regelvorrichtungen auf, welche wiederum vom Fahrer von seiner Fahrerkabine aus bedient werden können. Bei Mähdreschern zählt zu diesen Arbeitsgeräten etwa das Dreschwerk, welches regelmäßig einen Dreschkorb und eine Mehrzahl von Dreschorganen sowie eine zum Dreschwerk in Bewegungsrichtung des Erntegutstroms nachgeordnete Reinigungseinrichtung mit einem Gebläse und mehreren Sieben beinhaltet.

Je nachdem, was für ein Erntegut, z. B. Raps, Weizen oder Gerste, geerntet werden soll und welche Randbedingungen auf dem Erntefeld und seiner Umgebung herrschen, zu welchen Randbedingungen etwa Feuchtigkeit, Bestandshöhe, Bodenbeschaffenheit usw. zählen, ist eine unterschiedliche Steuerung und Parametereinstellung der Arbeitsgeräte erforderlich, um eine möglichst hohe Qualität im Erntegut und gleichzeitig einen möglichst hohen Ertrag zu erreichen. Unerwünscht sind beispielsweise hohe Anteile von gebrochenen Körnern sowie von Verunreinigungen im Erntegut.

Aus der EP 2 189 781 A2 ist eine Messanordnung zur spektroskopischen Untersuchung und Durchsatzerfassung eines Erntegutstroms bekannt. Diese Messanordnung umfasst ein Spektrometer, eine Lichtquelle, ein Fenster, ein dispersives Element und einen Detektor, wobei die Lichtquelle im Betrieb den Erntegutstrom durch das Fenster beleuchtet und vom Erntegutstrom reflektiertes Licht durch das Fenster auf das dispersive Element fällt, das es wellenlängenabhängig in unterschiedliche Richtungen auf den Detektor ablenkt. Außerdem weist die Messanordnung eine mit dem Erntegutstrom zusammenwirkende Durchsatzermittlungseinrichtung mit einer Prallplatte auf. Das Fenster befindet sich im Bereich unterhalb der maximalen Krümmung der Prallplatte und ist fest an der Prallplatte in einem entsprechenden Ausschnitt derselben montiert. Hierbei ragt dieses Fenster in den Strömungsbereich des Erntegutstroms und stört die Strömung des Erntegutstroms, sodass beispielsweise ungewünschte Turbulenzen entstehen. Außerdem kann mit einem Spektrometer keine Bildserie des Erntegutstroms erzeugt werden.

Aus der EP 2 401 906 A1 ist eine selbstfahrende landwirtschaftliche Arbeitsmaschine nach dem Oberbegriff des Anspruchs 1 bekannt.

Der vorliegenden Erfindung liegt die Aufgabe zugrunde, eine verbesserte oder zumindest eine alternative Ausführungsform einer Messvorrichtung für eine selbstfahrende landwirtschaftliche Arbeitsmaschine anzugeben, wobei insbesondere die Positionierung und/oder die Ausgestaltung der Komponenten der Messvorrichtung bezüglich des Erntegutstrom derart bereitgestellt wird, dass ein kompakterer und/oder kostengünstigerer Aufbau der Messvorrichtung ermöglicht wird.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, dass eine Kameravorrichtung wenigstens teilweise in und/oder an einer Prallplatte angeordnet ist, gegen die der Erntegutstrom während des Betriebes der selbstfahrenden landwirtschaftlichen Arbeitsmaschine prallt.

Die erfindungsgemäße selbstfahrende landwirtschaftliche Arbeitsmaschine zur Aufnahme von Erntegut und zur Bearbeitung und Förderung eines aus dem aufgenommenen Erntegut gebildeten Erntegutstroms kann als Mähdrescher und Feldhäcksler ausgebildet sein. Die selbstfahrende landwirtschaftliche Arbeitsmaschine weist Messvorrichtung zur Messung des Erntegutstroms.

Die Messvorrichtung weist eine Kameravorrichtung zur Aufnahme einer Bildserie des Erntegutstroms und eine Durchsatzmessvorrichtung zur Durchsatzmessung des Erntegutstroms auf. Zusätzlich umfasst die Messvorrichtung eine Prallplatte, gegen die der Erntegutstrom während des Betriebes der selbstfahrenden landwirtschaftlichen Arbeitsmaschine prallt. Die Position der Prallplatte hängt vom Durchsatz des Erntegutstroms ab und wird mittels der Durchsatzmessvorrichtung erfasst. Die Messvorrichtung kann am Auslass eines das Erntegut von einer Reinigung nach oben fördernden Kornelevators der selbstfahrenden landwirtschaftlichen Arbeitsmaschine angeordnet sein.

Die Durchsatzmessvorrichtung zur Durchsatzmessung kann als Kraftmesszelle, insbesondere als Wägezelle und/oder als Plattformwägezelle, ausgebildet sein.

Die Kameravorrichtung ist wenigstens teilweise in und/oder an der Prallplatte angeordnet ist. Dies hat insbesondere den Vorteil, dass die Kameravorrichtung als auch die Prallplatte an einer Stelle bezüglich des Erntegutstroms positioniert sind, wo das Erntegut des Erntegutstroms nicht entmischt ist. Hierdurch wird sichergestellt, dass das Erntegut an der Kameravorrichtung derart anliegt, dass optimale, insbesondere kontrastreiche, Bilder des Ernteguts erzeugt werden können und gleichzeitig die Prallplatte an der Stellte positioniert ist, die ein Maximum des Ernteguts des Erntegutstroms anströmt und umgelenkt wird. Die Kraft bei der Umlenkung des Ernteguts des Erntegutstroms ist das Maß für den Korndurchsatz und damit für den Ertrag.

Erfindungsgemäß ist die Durchsatzmessvorrichtung über die Kameravorrichtung mit der Prallplatte verbunden.

Mit anderen Worten ausgedrückt, ist die Durchsatzmessvorrichtung mit der Kameravorrichtung verbunden, während die Kameravorrichtung mit der Prallplatte verbunden ist. Hierdurch wird die Kraft, die bei der Umlenkung des Ernteguts des Erntegutstroms auf die Prallplatte und/oder auf die Kameravorrichtung einwirkt, über die Kameravorrichtung an die Durchsatzmessvorrichtung übertragen. Hierdurch wird ein kompakterer und kostengünstigerer Aufbau der Messvorrichtung erzielt.

Bei einer vorteilhaften Weiterbildung der erfindungsgemäßen Lösung ist vorgesehen, dass die Kameravorrichtung ein optisch transparentes Gehäusestück aufweist, wobei die Kameravorrichtung derart in und/oder an der Prallplatte angeordnet ist, dass dieses optisch transparente Gehäusestück zusätzlich zur Prallplatte einen Prallbereich ausbildet, gegen den der Erntegutstrom während des Betriebes der selbstfahrenden landwirtschaftlichen Arbeitsmaschine prallt. Die Prallplatte kann aus einem optisch nicht transparenten Material und/oder Werkstoff ausgebildet sein. Das optisch transparente Gehäusestück kann beispielsweise eine Scheibe, insbesondere eine Glasscheibe, sein. Das optisch transparente Gehäusestück kann eine Linse ausbilden. Das optisch transparente Gehäusestück kann aus einem hinreichend für das sichtbare Licht transparentem Material ausgebildet sein. Hierdurch wird ein kompakterer und kostengünstigerer Aufbau der Messvorrichtung erzielt.

Bei einer vorteilhaften Weiterbildung der erfindungsgemäßen Lösung ist vorgesehen, dass die Prallplatte eine gekrümmte Prallfläche aufweist, gegen die der Erntegutstrom während des Betriebes der selbstfahrenden landwirtschaftlichen Arbeitsmaschine prallt, wobei auch das transparente Gehäusestück der Kameravorrichtung eine gekrümmte Gehäusestückfläche aufweist, gegen die der Erntegutstrom während des Betriebes der selbstfahrenden landwirtschaftlichen Arbeitsmaschine prallt. Die gekrümmte Gehäusestückfläche kann das transparente Gehäusestück zu einer Linse der Kameravorrichtung ausbilden.

Bei einer vorteilhaften Weiterbildung der erfindungsgemäßen Lösung ist vorgesehen, dass die gekrümmte Gehäusestückfläche und die gekrümmte Prallfläche jeweils konkav gekrümmt ausgebildet sind. Hierbei können die gekrümmte Gehäusestückfläche und die gekrümmte Prallfläche ausgehend vom Erntegutstrom und/oder ausgehend von einem Kettenrad eines Kornelevators der selbstfahrenden landwirtschaftlichen Arbeitsmaschine betrachtet jeweils konkav gekrümmt ausgebildet sein.

Bei einer vorteilhaften Weiterbildung der erfindungsgemäßen Lösung ist vorgesehen, dass das transparente Gehäusestück und die Prallplatte derart ausgebildet, insbesondere derart geformt und/oder ausgerichtet und/oder positioniert, sind, dass die Gehäusestückfläche weder vorgesetzt noch zurückgesetzt bezüglich der Prallfläche angeordnet ist. Eine solche Anordnung hat den Vorteil, dass das transparente Gehäusestück der Kameravorrichtung nicht nur besonders nah an den Erntegutstrom angeordnet werden kann und ihr Vorhandensein die Führung des Erntegutstroms auf dem Ernteguttransportweg möglichst wenig beeinflusst, sondern sie bewirkt auch, dass die Bestandteile des Erntegutstroms selber durch ihr Auftreffen auf das transparente Gehäusestück von alleine seine Reinigung bewirken. Ein Verstauben wird damit wirksam verhindert.

Bei einer vorteilhaften Weiterbildung der erfindungsgemäßen Lösung ist vorgesehen, dass die Kameravorrichtung wenigstens einen Bildsensor zur Aufnahme von zweidimensionalen Abbildungen des Erntegutstroms aufweist. Eine solche zweidimensionale Abbildung des Erntegutstroms bildet ein zweidimensionales Bild, insbesondere ein digitales zweidimensionales Bild, des Erntegutstroms aus. Mittels einen solchen zweidimensionalen Bildes können Bruchkörner und Nichtkörner des Erntegutstroms ermittelt werden.

Bei einer vorteilhaften Weiterbildung der erfindungsgemäßen Lösung ist vorgesehen, dass die Messvorrichtung zur Messung des Erntegutstroms am oberen Ende eines Kornelevators der selbstfahrenden landwirtschaftlichen Arbeitsmaschine angeordnet ist. Die Messvorrichtung kann am Auslass des Kornelevators, insbesondere am Auslass des nach oben fördernden Kornelevators, angeordnet sein.

Bei einer vorteilhaften Weiterbildung der erfindungsgemäßen Lösung ist vorgesehen, dass die Messvorrichtung einen Feuchtigkeitssensor zur Messung der Feuchtigkeit des Erntegutstroms aufweist.

Bei einer vorteilhaften Weiterbildung der erfindungsgemäßen Lösung ist vorgesehen, dass der Feuchtigkeitssensor an und/oder in der Prallplatte angeordnet ist.

Bei einer vorteilhaften Weiterbildung der erfindungsgemäßen Lösung ist vorgesehen, dass die selbstfahrende landwirtschaftliche Arbeitsmaschine eine Auswertevorrichtung zur Ermittlung des Erntegutparameters "Bruchkornanteil" (BKA) des Erntegutstroms und/oder des Erntegutparameters "Nichtkornanteil" (NKA) des Erntegutstroms basierend auf einer Bildanalyse der aufgenommenen Bildserie aufweist.

Mit dem Begriff "Bruchkornanteil" bzw. "Nichtkornanteil" ist der Anteil der zerbrochenen Körner an allen Körnern im Erntegutstrom einerseits und der Anteil von Material im Erntegutstrom, welches kein Korn im Sinne des Ernteguts ist, andererseits gemeint. Es kann also in den Nichtkornanteil auch Material einfließen, welches zwar eigentlich auch Korn darstellt, aber kein Korn des aktuell geernteten Ernteguts ist. Dieser Bruchkorn- oder Nichtkornanteil kann sich auf die gerade von der entsprechenden Bildserie erfasste Bildfläche oder auf ein bestimmtes, soeben erfasstes Teilvolumen des Erntegutstroms beziehen. Bevorzugt ist aber, dass der Bruchkornanteil und/oder der Nichtkornanteil auf einen Durchsatz des Haupterntegutstroms bezogen ist, also auf die Gesamtheit des Haupterntegutstroms, wie er durch die Erntemaschine und speziell den Mähdrescher geführt ist.

Der ermittelte Bruchkornanteil und/oder Nichtkornanteil kann auf einem einzelnen Bild der Bildserie, auf der ganzen Bildserie oder auf einer speziellen Auswahl von einem oder mehreren Bildern der Bildserie basieren. Dabei können ein oder mehrere Bilder aus der Bildserie ausgewählt werden, welche gemäß einem Qualitätskriterium die beste Aufnahme darstellen. Ein solches Qualitätskriterium kann eine besonders geeignete Helligkeits-, Kontur- oder Kontrastverteilung sein. Die Auswertevorrichtung nimmt prinzipiell eine Bildanalyse der Bildserie oder eines Teiles der Bildserie vor, bei welcher vorzugsweise zunächst Bruchkörner und Nichtkörner in dem Bild anhand geeigneter Algorithmen erkannt werden. Es wird dann die von den Bruchkörnern und Nichtkörnern eingenommene Fläche auf dem zweidimensionalen Bild als Flächenverhältnis berechnet und dieses Flächenverhältnis mithilfe einer geeigneten Extrapolationsfunktion auf einen Volumenanteil hochgerechnet.

Ferner betrifft die Erfindung die Messvorrichtung für eine selbstfahrende landwirtschaftliche Arbeitsmaschine, wobei bezüglich der Ausgestaltung der Messvorrichtung auf die zuvor und nachfolgenden Erläuterungen bezüglich der Messvorrichtung verwiesen wird.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Seitenansicht einer selbstfahrenden landwirtschaftlichen Arbeitsmaschine, und
- Fig. 2: eine Seitenansicht eines Kornelevators der selbstfahrenden landwirtschaftlichen Arbeitsmaschine der Fig. 1.

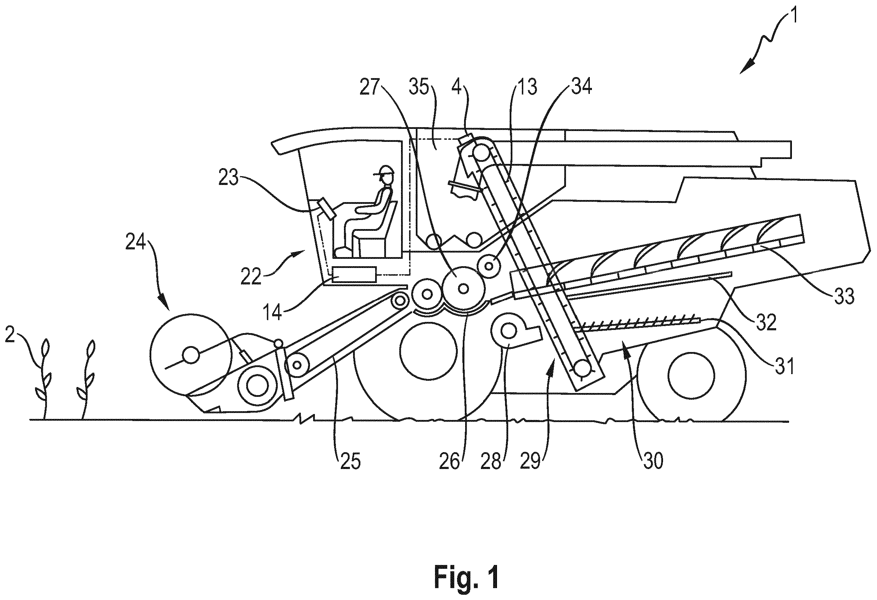

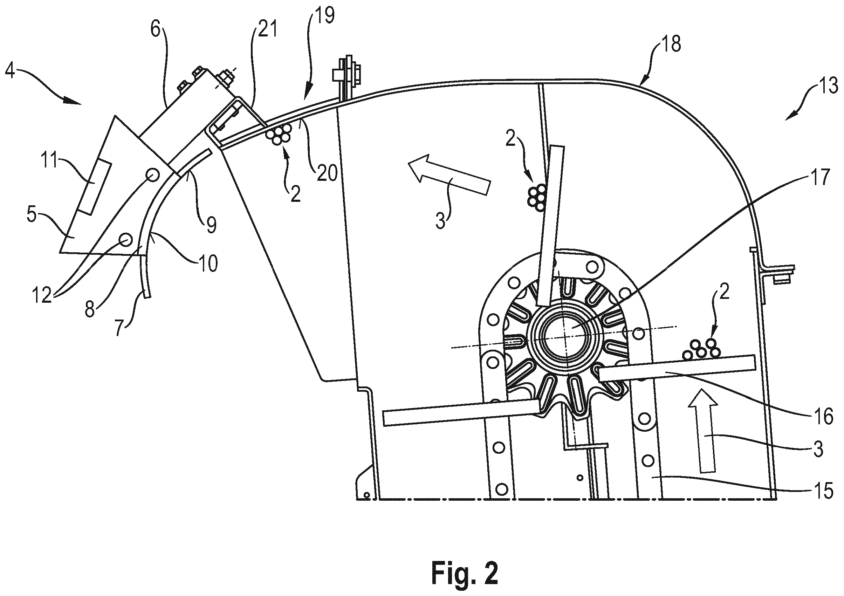

Die Fig. 1 zeigt eine selbstfahrende landwirtschaftliche Arbeitsmaschine 1 zur Aufnahme von Erntegut 2 und zur Bearbeitung und Förderung eines aus dem aufgenommenen Erntegut 2 gebildeten Erntegutstroms 3, wobei der Erntegutstrom 3 in der Fig. 2 dargestellt ist.

Während des Betriebs der selbstfahrenden landwirtschaftlichen Arbeitsmaschine 1 fährt ein Fahrer, der sich in einer Fahrerkabine 22 aufhält, die selbstfahrenden landwirtschaftlichen Arbeitsmaschine 1 durch einen Erntegutbestand und nimmt dabei mit einem Schneidwerk 24 das Erntegut 2 auf. Mit einem Schrägförderer 25 wird dieses Erntegut 2 zum Dreschwerk, welches Dreschorgane 27 und Dreschkörbe 26 aufweist, gefördert.

Über eine Umlenktrommel 34 gelangt der Erntegutstrom in die hier als Trennrotor ausgebildete Trennvorrichtung 33, in welcher freibewegliche Körner des Erntegutstroms in einen unteren Bereich abgeschieden werden. Von hier aus gelangt der Erntegutstrom über den Rücklaufboden 32 zu einer Reinigungsvorrichtung 30, die wie hier dargestellt aus mehreren Siebebenen 31 und einem Gebläse 28 besteht. Von hier aus führt ein Kornelevator 13 den Erntegutstrom schließlich zum Korntank 35.

Die bisher angeführten Komponenten der selbstfahrenden landwirtschaftlichen Arbeitsmaschine 1 stellen ansteuerbare Arbeitsgeräte 29 der selbstfahrenden landwirtschaftlichen Arbeitsmaschine 1 dar, die mittels einer Auswertevorrichtung 14 und/oder einer Steuervorrichtung 23 angesteuert und/oder geregelt werden können. Für diese Steuerung und/oder Reglung können die Auswertevorrichtung 14 und/oder einer Steuervorrichtung 23 auf Informationen einer Messvorrichtung 4 zugreifen, die in der Fig. 2 dargestellt ist.

Die Messvorrichtung 4 zur Messung des Erntegutstroms 3 ist am oberen Ende eines Kornelevators 13 der selbstfahrenden landwirtschaftlichen Arbeitsmaschine 1 angeordnet. Der Kornelevators 13 weist eine Förderkette 15 auf, an der Förderelemente 16 zur Förderung des Erntegutes 2 ausgebildet sind, wobei die Förderkette 15 mittel wenigstens einem Kettenrad 17 angetrieben wird. Der Kornelevator 13 weist eine Deckelabschnitt 18 und einen daran lösbar befestigten Führungsabschnitt 19 mit einer Führungsfläche 20 auf, wobei die Messvorrichtung 4 mittels einer Halterung 21 an dem Führungsabschnitt 19 lösbar befestigt ist. Die Messvorrichtung 4 ist am Auslass des nach oben fördernden Kornelevators 13 angeordnet.

Die Messvorrichtung 4 weist eine Kameravorrichtung 5 zur Aufnahme einer Bildserie des Erntegutstroms 3 und eine Durchsatzmessvorrichtung 6 zur Durchsatzmessung des Erntegutstroms 3 auf. Zusätzlich umfasst die Messvorrichtung 4 eine Prallplatte 7, gegen die der Erntegutstrom 3 während des Betriebes der selbstfahrenden landwirtschaftlichen Arbeitsmaschine 1 prallt. Die Position der Prallplatte 7 hängt vom Durchsatz des Erntegutstroms 3 ab und wird mittels der Durchsatzmessvorrichtung 6 erfasst. Die Durchsatzmessvorrichtung 6 zur Durchsatzmessung kann als Kraftmesszelle, insbesondere als Wägezelle und/oder als Plattformwägezelle, ausgebildet sein.

Die Kameravorrichtung 5 ist wenigstens teilweise in und/oder an der Prallplatte 7 angeordnet. Dies hat insbesondere den Vorteil, dass die Kameravorrichtung 5 als auch die Prallplatte 7 an einer Stelle bezüglich des Erntegutstroms 3 positioniert sind, wo das Erntegut 2 des Erntegutstroms 3 nicht entmischt ist. Hierdurch wird sichergestellt, dass das Erntegut 2 an der Kameravorrichtung 5 derart anliegt, dass optimale, insbesondere kontrastreiche, Bilder des Ernteguts 2 erzeugt werden können und gleichzeitig die Prallplatte 7 an der Stellte positioniert ist, die ein Maximum des Ernteguts 2 des Erntegutstroms 3 anströmt und umgelenkt wird. Die Kraft bei der Umlenkung des Ernteguts 2 des Erntegutstroms 3 ist das Maß für den Korndurchsatz und damit für den Ertrag.

Die Durchsatzmessvorrichtung 6 ist über die Kameravorrichtung 5 mit der Prallplatte 7 verbunden. Mit anderen Worten ausgedrückt, ist die Durchsatzmessvorrichtung 6 mit der Kameravorrichtung 5 verbunden, während die Kameravorrichtung 5 mit der Prallplatte 7 verbunden ist. Hierdurch wird die Kraft, die bei der Umlenkung des Ernteguts 2 des Erntegutstroms 3 auf die Prallplatte 7 und/oder auf die Kameravorrichtung 5 einwirkt, über die Kameravorrichtung 5 an die Durchsatzmessvorrichtung 6 übertragen.

Die Kameravorrichtung 5 weist ein optisch transparentes Gehäusestück 8 auf, wobei die Kameravorrichtung 5 derart in und/oder an der Prallplatte 7 angeordnet ist, dass dieses optisch transparente Gehäusestück 8 zusätzlich zur Prallplatte 7 einen Prallbereich ausbildet, gegen den der Erntegutstrom 3 während des Betriebes der selbstfahrenden landwirtschaftlichen Arbeitsmaschine 1 prallt. Das optisch transparente Gehäusestück 8 kann beispielsweise eine Scheibe, insbesondere eine Glasscheibe, sein und beispielsweise eine optische Linse ausbilden.

Die Prallplatte 7 weist eine gekrümmte Prallfläche 9 auf, gegen die der Erntegutstrom 3 während des Betriebes der selbstfahrenden landwirtschaftlichen Arbeitsmaschine 1 prallt, wobei auch das transparente Gehäusestück 8 der Kameravorrichtung eine gekrümmte Gehäusestückfläche 10 aufweist, gegen die der Erntegutstrom 3 während des Betriebes der selbstfahrenden landwirtschaftlichen Arbeitsmaschine 1 prallt. Die gekrümmte Gehäusestückfläche 10 kann das transparente Gehäusestück 8 zu einer Linse der Kameravorrichtung 5 ausbilden.

Die gekrümmte Gehäusestückfläche 10 und die gekrümmte Prallfläche 9 sind jeweils konkav gekrümmt ausgebildet sind. Hierbei können die gekrümmte Gehäusestückfläche 10 und die gekrümmte Prallfläche 9 ausgehend vom Erntegutstrom 3 und/oder ausgehend vom Kettenrad 17 des Kornelevators 13 der selbstfahrenden landwirtschaftlichen Arbeitsmaschine 1 betrachtet jeweils konkav gekrümmt ausgebildet sein.

Das transparente Gehäusestück 8 und die Prallplatte 7 sind derart ausgebildet, insbesondere derart geformt und/oder ausgerichtet und/oder positioniert, dass die Gehäusestückfläche 10 weder vorgesetzt noch zurückgesetzt bezüglich der Prallfläche 9 angeordnet ist. Eine solche Anordnung hat den Vorteil, dass das transparente Gehäusestück 8 der Kameravorrichtung 5 nicht nur besonders nah an den Erntegutstrom 3 angeordnet werden kann und ihr Vorhandensein die Führung des Erntegutstroms 3 auf dem Ernteguttransportweg möglichst wenig beeinflusst, sondern sie bewirkt auch, dass die Bestandteile des Erntegutstroms 3 selber durch ihr Auftreffen auf das transparente Gehäusestück 8 von alleine seine Reinigung bewirken. Ein Verstauben wird damit wirksam verhindert.

Die Kameravorrichtung 5 weist einen Bildsensor 11 zur Aufnahme von zweidimensionalen Abbildungen des Erntegutstroms 3 auf. Eine solche zweidimensionale Abbildung des Erntegutstroms 3 bildet ein zweidimensionales Bild, insbesondere ein digitales zweidimensionales Bild, des Erntegutstroms 3 aus. Mittels einen solchen zweidimensionalen Bildes können Bruchkörner und Nichtkörner des Erntegutstroms 3 ermittelt werden. Ferner weist die Kameravorrichtung 5 wenigstens eine Beleuchtungsvorrichtung 12 auf.

Ferner kann Messvorrichtung 4 einen nicht dargestellten Feuchtigkeitssensor zur Messung der Feuchtigkeit des Erntegutstroms 3 aufweisen. Dieser Feuchtigkeitssensor kann an und/oder in der Prallplatte 7 angeordnet sein.

Die Auswertevorrichtung 14 der selbstfahrenden landwirtschaftlichen Arbeitsmaschine 1 ist zur Ermittlung des Erntegutparameters "Bruchkornanteil" (BKA) des Erntegutstroms und/oder des Erntegutparameters "Nichtkornanteil" (NKA) des Erntegutstroms basierend auf einer Bildanalyse der aufgenommenen Bildserie ausgebildet und/oder programmiert.

Der ermittelte Bruchkornanteil und/oder Nichtkornanteil kann auf einem einzelnen Bild der Bildserie, auf der ganzen Bildserie oder auf einer speziellen Auswahl von einem oder mehreren Bildern der Bildserie basieren. Dabei können ein oder mehrere Bilder aus der Bildserie ausgewählt werden, welche gemäß einem Qualitätskriterium die beste Aufnahme darstellen. Ein solches Qualitätskriterium kann eine besonders geeignete Helligkeits-, Kontur- oder Kontrastverteilung sein. Die Auswertevorrichtung 14 nimmt prinzipiell eine Bildanalyse der Bildserie oder eines Teiles der Bildserie vor, bei welcher vorzugsweise zunächst Bruchkörner und Nichtkörner in dem Bild anhand geeigneter Algorithmen erkannt werden. Es wird dann die von den Bruchkörnern und Nichtkörnern eingenommene Fläche auf dem zweidimensionalen Bild als Flächenverhältnis berechnet und dieses Flächenverhältnis mithilfe einer geeigneten Extrapolationsfunktion auf einen Volumenanteil hochgerechnet.

Die Steuervorrichtung 23 kann Auswertedaten der Auswertevorrichtung 14 und/oder Durchsatzmessungswerte der Durchsatzmessvorrichtung 6 erhalten und die ansteuerbare Arbeitsgeräte 29 der selbstfahrenden landwirtschaftlichen Arbeitsmaschine 1 basierend auf diesen Auswertedaten und/oder Durchsatzmessungswerte ansteuern und/oder regeln. Die Steuervorrichtung 23 kann kommunizierend mit der Auswertevorrichtung 14 und/oder mit der Messvorrichtung 4 verbunden sein. Die Auswertevorrichtung 14 kann kommunizierend mit der Messvorrichtung 4 verbunden sein.

### Bezugszeichenliste

| | | | |
|---|---|---|---|
| 1 | Selbstfahrende landwirtschaftliche Arbeitsmaschine | 33 | Trennvorrichtung |
| | | 34 | Umlenktrommel |
| 2 | Erntegut | 35 | Korntank |
| 3 | Erntegutstrom | | |
| 4 | Messvorrichtung | | |
| 5 | Kameravorrichtung | | |
| 6 | Durchsatzmessvorrichtung | | |
| 7 | Prallplatte | | |
| 8 | transparentes Gehäusestück | | |
| 9 | gekrümmte Prallfläche | | |
| 10 | gekrümmte Gehäusestückfläche | | |
| 11 | Bildsensor | | |
| 12 | Beleuchtungsvorrichtung | | |
| 13 | Kornelevator | | |
| 14 | Auswertevorrichtung | | |
| 15 | Förderkette | | |
| 16 | Förderelement | | |
| 17 | Kettenrad | | |
| 18 | Deckelabschnitt | | |
| 19 | Führungsabschnitt | | |
| 20 | Führungsfläche | | |
| 21 | Halterung | | |
| 22 | Fahrerkabine | | |
| 23 | Steuervorrichtung | | |
| 24 | Schneidwerk | | |
| 25 | Schrägförderer | | |
| 26 | Dreschkorb | | |
| 27 | Dreschorgane | | |
| 28 | Gebläse | | |
| 29 | ansteuerbare Geräte | | |
| 30 | Reinigungsvorrichtung | | |
| 31 | Siebebene | | |
| 32 | Rücklaufboden | | |

## Patentansprüche

1. Selbstfahrende landwirtschaftliche Arbeitsmaschine (1) zur Aufnahme von Erntegut (2) und zur Bearbeitung und Förderung eines aus dem aufgenommenen Erntegut (2) gebildeten Erntegutstroms (3),
- mit einer Messvorrichtung (4) zur Messung des Erntegutstroms (3),
- wobei die Messvorrichtung (4) eine Kameravorrichtung (5) zur Aufnahme einer Bildserie des Erntegutstroms (3) aufweist,
- wobei die Messvorrichtung (4) eine Durchsatzmessvorrichtung (6) zur Durchsatzmessung des Erntegutstroms (3) aufweist,
- wobei die Messvorrichtung (4) eine Prallplatte (7) aufweist, gegen die der Erntegutstrom (3) während des Betriebes der selbstfahrenden landwirtschaftlichen Arbeitsmaschine (1) prallt,
- wobei die Kameravorrichtung (5) wenigstens teilweise in und/oder an der Prallplatte (7) angeordnet ist,
**dadurch gekennzeichnet**
- **dass** die Durchsatzmessvorrichtung (6) über die Kameravorrichtung (5) mit der Prallplatte (7) verbunden ist.

2. Selbstfahrende landwirtschaftliche Arbeitsmaschine (1) nach Anspruch 1,
**dadurch gekennzeichnet,**
- **dass** die Kameravorrichtung (5) ein optisch transparentes Gehäusestück (8) aufweist,
- wobei die Kameravorrichtung (5) derart in und/oder an der Prallplatte (7) angeordnet ist, dass dieses optisch transparente Gehäusestück (8) zusätzlich zur Prallplatte (7) einen Prallbereich ausbildet, gegen den der Erntegutstrom (3) während des Betriebes der selbstfahrenden landwirtschaftlichen Arbeitsmaschine (1) prallt.

3. Selbstfahrende landwirtschaftliche Arbeitsmaschine (1) nach Anspruch 2,
**dadurch gekennzeichnet,**
- **dass** die Prallplatte (7) eine gekrümmte Prallfläche (9) aufweist, gegen die der Erntegutstrom (3) während des Betriebes der selbstfahrenden landwirtschaftlichen Arbeitsmaschine (1) prallt,
- wobei das transparente Gehäusestück (8) der Kameravorrichtung (5) eine gekrümmte Gehäusestückfläche (10) aufweist, gegen die der Erntegutstrom (3) während des Betriebes der selbstfahrenden landwirtschaftlichen Arbeitsmaschine (1) prallt.

4. Selbstfahrende landwirtschaftliche Arbeitsmaschine (1) nach Anspruch 3,
**dadurch gekennzeichnet,**
**dass** die gekrümmte Gehäusestückfläche (10) und die gekrümmte Prallfläche (9) jeweils konkav gekrümmt ausgebildet sind.

5. Selbstfahrende landwirtschaftliche Arbeitsmaschine (1) nach Anspruch 4,
**dadurch gekennzeichnet,**
**dass** die gekrümmte Gehäusestückfläche (10) und die gekrümmte Prallfläche (9) einen identischen Krümmungsradius aufweisen.

6. Selbstfahrende landwirtschaftliche Arbeitsmaschine (1) nach einem der Ansprüche 2 bis 5,
**dadurch gekennzeichnet,**
**dass** das transparente Gehäusestück (8) und die Prallplatte (7) derart ausgebildet, insbesondere derart geformt und/oder ausgerichtet und/oder positioniert, sind, dass die Gehäusestückfläche (10) weder vorgesetzt noch zurückgesetzt bezüglich der Prallfläche (9) angeordnet ist.

7. Selbstfahrende landwirtschaftliche Arbeitsmaschine (1) nach einem der vorhergehenden Ansprüche,
**dadurch gekennzeichnet,**
**dass** die Kameravorrichtung (5) wenigstens einen Bildsensor (11) zur Aufnahme von zweidimensionalen Abbildungen des Erntegutstroms (3) aufweist.

8. Selbstfahrende landwirtschaftliche Arbeitsmaschine (1) nach einem der vorhergehenden Ansprüche,
**dadurch gekennzeichnet,**
**dass** die Messvorrichtung (4) zur Messung des Erntegutstroms (3) am oberen Ende eines Kornelevators (13) der selbstfahrenden landwirtschaftlichen Arbeitsmaschine (1) angeordnet ist.

9. Selbstfahrende landwirtschaftliche Arbeitsmaschine (1) nach einem der vorhergehenden Ansprüche,
**dadurch gekennzeichnet,**
**dass** die Messvorrichtung (4) einen Feuchtigkeitssensor aufweist.

10. Selbstfahrende landwirtschaftliche Arbeitsmaschine (1) nach Anspruch 9,
**dadurch gekennzeichnet,**
**dass** der Feuchtigkeitssensor an und/oder in der Prallplatte (7) angeordnet ist.

11. Selbstfahrende landwirtschaftliche Arbeitsmaschine (1) nach einem der vorhergehenden Ansprüche,
**dadurch gekennzeichnet,**
**dass** die selbstfahrende landwirtschaftliche Arbeitsmaschine (1) eine Auswertevorrichtung (14) zur Ermittlung des Erntegutparameters "Bruchkornanteil" (BKA) des Erntegutstroms (3) und/oder des Erntegutparameters "Nichtkornanteil" (NKA) des Erntegutstroms (3) basierend auf einer Bildanalyse der aufgenommenen Bildserie aufweist.

## Claims

1. Self-propelled agricultural working machine (1) for picking up harvested crop (2) and for processing and conveying a harvested crop flow (3) formed from the picked-up harvested crop (2);
- having a measuring device (4) for measuring the harvested crop flow (3),
- wherein the measuring device (4) has a camera device (5) for receiving a series of images of the harvested crop flow (3),
- wherein the measuring device (4) has a throughput-measuring device (6) for measuring the throughput of the harvested crop flow (3),
- wherein the measuring device (4) has a baffle plate (7) against which the harvested crop flow (3) impacts during the operation of the self-propelled agricultural working machine (1),
- wherein the camera device (5) is at least partially arranged in and/or on the baffle plate (7),
**characterized**
- **in that** the throughput-measuring device (6) is connected to the baffle plate (7) via the camera device (5).

2. Self-propelled agricultural working machine (1) according to Claim 1,
**characterized**
- **in that** the camera device (5) has an optically transparent housing piece (8),
- wherein the camera device (5) is arranged in and/or on the baffle plate (7) in such a way that, in addition to the baffle plate (7), said optically transparent housing piece (8) forms an impact region against which the harvested crop flow (3) impacts during the operation of the self-propelled agricultural working machine (1).

3. Self-propelled agricultural working machine (1) according to Claim 2,
**characterized**
- **in that** the baffle plate (7) has a curved impact surface (9) against which the harvested crop flow (3) impacts during the operation of the self-propelled agricultural working machine (1),
- wherein the transparent housing piece (8) of the camera device (5) has a curved housing-piece surface (10) against which the harvested crop flow (3) impacts during the operation of the self-propelled agricultural working machine (1).

4. Self-propelled agricultural working machine (1) according to Claim 3,
**characterized**
**in that** the curved housing-piece surface (10) and the curved impact surface (9) are each concavely curved.

5. Self-propelled agricultural working machine (1) according to Claim 4,
**characterized**
**in that** the curved housing-piece surface (10) and the curved impact surface (9) have an identical radius of curvature.

6. Self-propelled agricultural working machine (1) according to any one of Claims 2 to 5,
**characterized**
**in that** the transparent housing piece (8) and the baffle plate (7) are designed in such a way, in particular are shaped and/or aligned and/or positioned in such a way, that the housing-piece surface (10) is neither set in front nor set back with respect to the impact surface (9).

7. Self-propelled agricultural working machine (1) according to any one of the preceding claims,
**characterized**
**in that** the camera device (5) has at least one image sensor (11) for recording two-dimensional images of the harvested crop flow (3).

8. Self-propelled agricultural working machine (1) according to any one of the preceding claims,
**characterized**
**in that** the measuring device (4) for measuring the harvested crop flow (3) is arranged at the upper end of a grain elevator (13) of the self-propelled agricultural working machine (1).

9. Self-propelled agricultural working machine (1) according to any one of the preceding claims,
**characterized**
**in that** the measuring device (4) has a moisture sensor.

10. Self-propelled agricultural working machine (1) according to Claim 9,
**characterized**
**in that** the moisture sensor is arranged on and/or in the baffle plate (7).

11. Self-propelled agricultural working machine (1) according to any one of the preceding claims,
**characterized**
**in that** the self-propelled agricultural working machine (1) has an evaluation device (14) for determining the harvested crop parameter "broken grain fraction" (BKA) of the harvested crop flow (3) and/or the harvested crop parameter "non-grain fraction" (NKA) of the harvested crop flow (3) on the basis of an image analysis of the recorded series of images.

## Revendications

1. Machine de travail agricole (1) automotrice, destinée au ramassage de récolte (2) et au traitement et au convoyage d'un flux de récolte (3) constitué de la récolte (2) ramassée,
- comprenant un dispositif de mesure (4) destiné à mesurer le flux de récolte (3),
- le dispositif de mesure (4) présentant un dispositif de caméra (5) destiné à la capture d'une série d'images du flux de récolte (3),
- le dispositif de mesure (4) présentant un dispositif de mesure de débit (6) destiné à mesurer le débit du flux de récolte (3),
- le dispositif de mesure (4) présentant une plaque d'impact (7) que le flux de récolte (3) percute pendant le fonctionnement de la machine agricole (1) automotrice,
- le dispositif de caméra (5) étant installé au moins en partie dans et/ou sur la plaque d'impact (7),
**caractérisée en ce que**
- le dispositif de mesure de débit (6) est relié à la plaque d'impact (7) par l'intermédiaire du dispositif de caméra (5).

2. Machine de travail agricole (1) automotrice selon la revendication 1,
**caractérisée en ce que**
- le dispositif de caméra (5) présente une partie de boîtier (8) optiquement transparente,
- le dispositif de caméra (5) étant installé dans et/ou sur la plaque d'impact (7) de manière à ce que cette partie de boîtier (8) optiquement transparente forme, en plus de la plaque d'impact (7), une zone d'impact que le flux de récolte (3) percute pendant le fonctionnement de la machine de travail agricole (1) automotrice.

3. Machine de travail agricole (1) automotrice selon la revendication 2,
**caractérisée en ce que**
- la plaque d'impact (7) présente une surface d'impact (9) incurvée que le flux de récolte (3) percute pendant le fonctionnement de la machine agricole (1) automotrice,
- la partie de boîtier (8) transparente du dispositif de caméra (5) présentant une surface de partie de boîtier (10) incurvée que le flux de récolte (3) heurte pendant le fonctionnement de la machine agricole (1) automotrice.

4. Machine de travail agricole (1) automotrice selon la revendication 3,
**caractérisée en ce que**
la surface de partie de boîtier (10) incurvée et la surface d'impact (9) incurvée sont chacune réalisées sous une forme incurvée concave.

5. Machine de travail agricole (1) automotrice selon la revendication 4,
**caractérisée en ce que**
la surface de partie de boîtier (10) incurvée et la surface d'impact (9) incurvée présentent un rayon de courbure identique.

6. Machine de travail agricole (1) automotrice selon une des revendications 2 à 5,
**caractérisée en ce que**
la partie de boîtier (8) transparente et la plaque d'impact (7) sont réalisées, en particulier formées et/ou orientées et/ou positionnées de manière à ce que la surface de partie de boîtier (10) soit disposée ni en avant ni en arrière par rapport à la plaque d'impact (7).

7. Machine de travail agricole (1) automotrice selon une des revendications précédentes,
**caractérisée en ce que**
le dispositif de caméra (5) présente au moins un capteur d'images (11) destiné à capturer des représentations bidimensionnelles du flux de récolte (3).

8. Machine de travail agricole (1) automotrice selon une des revendications précédentes,
**caractérisée en ce que**
le dispositif de mesure (4) destiné à mesurer le flux de récolte (3) est installé à l'extrémité supérieure d'un élévateur de grains (13) de la machine de travail agricole (1) automotrice.

9. Machine de travail agricole (1) automotrice selon une des revendications précédentes,
**caractérisée en ce que**
le dispositif de mesure (4) présente un capteur d'humidité.

10. Machine de travail agricole (1) automotrice selon la revendication 9,
**caractérisée en ce que**
le capteur d'humidité est disposé sur et/ou dans la plaque d'impact (7).

11. Machine de travail agricole (1) automotrice selon une des revendications précédentes,
**caractérisée en ce que**
la machine de travail agricole (1) automotrice présente un dispositif d'évaluation (14) destiné à déterminer le paramètre de récolte « proportion de grains cassés » (BKA) du flux de récolte (3) et/ou du paramètre de récolte « proportion non-grains » (NKA) du flux de récolte (3), sur la base d'une analyse d'images de la série d'images enregistrée.
